# EUROPEAN PATENT SPECIFICATION

(11) **EP 4 080 648 B1**
(45) Date of publication and mention of the grant of the patent: **25.03.2026**
(21) Application number: 20901432.3
(22) Date of filing: 25.11.2020
(51) Int. Cl.: H01M 50/102, H01M 50/147, H01M 50/107, H01M 50/152, H01M 50/167, H01M 50/186

(54) **CYLINDRICAL BATTERY**
ZYLINDERFÖRMIGE BATTERIE
BATTERIE CYLINDRIQUE

(30) Priority: 18.12.2019 JP 2019228369
(43) Date of publication of application: 26.10.2022
(73) Proprietor: Panasonic Energy Co., Ltd., Moriguchi-shi, Osaka 570-8511 (JP)
(72) Inventor: FUKUOKA, Takahiro, Osaka 540-6207 (JP); YAMASHITA, Shuichi, Osaka 540-6207 (JP); YOSHIDA, Satoshi, Osaka 540-6207 (JP); OKUDA, Kazuhiro, Osaka 540-6207 (JP)
(74) Representative: Novagraaf International SA
(86) International application number: PCT/JP2020/043706
(87) International publication number: WO 2021/124813

(56) References cited:
- EP-B1- 1 205 985
- JP-A- 2006 185 926
- JP-A- 2007 066 835
- JP-A- 2007 066 835
- JP-A- 2016 072 102

## Description

### TECHNICAL FIELD

The present disclosure relates to a cylindrical battery.

### BACKGROUND ART

Cylindrical batteries are conventionally known. For example, Patent Literature 1 discloses a cylindrical battery having a bottomed cylindrical exterior housing can which is open at one end, and a sealing assembly configured to seal the exterior housing can. In recent years, the use of cylindrical batteries has been expanding from a personal computer to an electric vehicle or the like, and therefore, there is a demand for an increase in capacity of the cylindrical battery, and studies are underway to increase the battery size. The document EP1205985 discloses a lithium secondary battery and the document JP2007066835 discloses a manufacturing method of cylindrical secondary battery.

### CITATION LIST

### PATENT LITERATURE

PATENT LITERATURE 1: Japanese Unexamined Patent Application Publication No. 2018-200826

### SUMMARY

The invention is as set out in the independent claims, further aspects of the invention are outlined in the dependent claims. Embodiments that do not fall within the scope of the claims do not describe part of the invention.

### TECHNICAL PROBLEM

When increasing the diameter of the exterior housing can according to an increase in the battery size, it is necessary to increase the diameter of the sealing assembly. When increasing the diameter of the sealing assembly, it is necessary to increase the caulking force when the sealing assembly is caulked to the exterior housing can, and the durability strength of the sealing assembly against an external impact, and therefore, it is necessary to increase the thickness of the sealing assembly. However, increasing the thickness of the sealing assembly causes an increase in weight of the sealing assembly, which leads to an increase in weight of the cylindrical battery.

It is an advantage of the present disclosure to provide a cylindrical battery that can suppress an increase in weight while increasing a capacity.

### SOLUTION TO PROBLEM

A cylindrical battery of an aspect of the present disclosure is a cylindrical battery, comprising: an electrode assembly in which a positive electrode and a negative electrode are wound with a separator interposed therebetween; an electrolyte; a bottomed cylindrical exterior housing can that houses the electrode assembly and the electrolyte; and a sealing assembly that is fixed to an opening end of the exterior housing can by caulking, wherein an outer diameter of a body part of the exterior housing can that houses the electrode assembly is 20 mm or more, and the opening end that houses the sealing assembly has an outer diameter smaller than the outer diameter of the body part.

### ADVANTAGEOUS EFFECT OF INVENTION

According to an aspect of the present disclosure, a cylindrical battery can be provided which can suppress an increase in weight while increasing a capacity.

### BRIEF DESCRIPTION OF DRAWING

FIG. 1 is a sectional view of a cylindrical battery, which is an example of an embodiment.
FIG. 2 is a sectional view of an exterior housing can and a sealing assembly, which are an example of an embodiment.
FIG. 3 is a flowchart illustrating a flow of a manufacturing process of manufacturing a cylindrical battery, which is an example of an embodiment.
FIG. 4 is a schematic view illustrating a part of the manufacturing process of manufacturing a cylindrical battery, which is an example of an embodiment.
FIG. 5 illustrates effects of a cylindrical battery, which is an example of an embodiment, in which FIG. 5(A) is a sectional view of a cylindrical battery, which is an example of an embodiment, and FIG. 5(B) is a sectional view of a cylindrical battery, which is a comparative example.

### DESCRIPTION OF EMBODIMENTS

Hereinafter, an embodiment of the present disclosure will be described with reference to the drawings. The shapes, materials, and numbers described below are examples for explanation, and can be changed according to the specifications of the cylindrical battery. Hereinafter, similar elements will be represented by the same reference signs in all drawings.

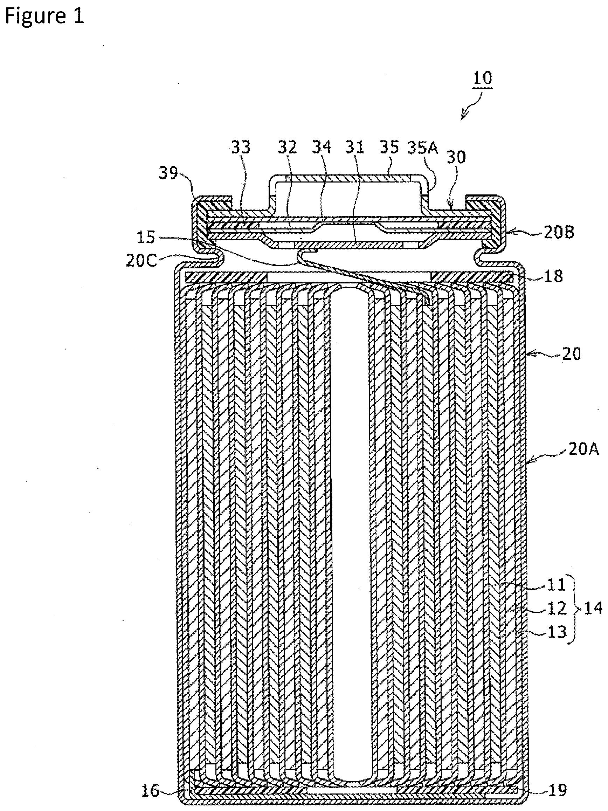

A cylindrical battery 10, which is an example of an embodiment, will be described with reference to FIG. 1. FIG. 1 is a sectional view of the cylindrical battery 10.

As illustrated in FIG. 1, the cylindrical battery 10 comprises an electrode assembly 14, an electrolyte (not illustrated), and an exterior housing can 20 that houses the electrode assembly 14 and the electrolyte. The electrode assembly 14 comprises a positive electrode 11, a negative electrode 12, and a separator 13, and has a wound structure in which the positive electrode 11 and the negative electrode 12 are spirally wound with the separator 13 interposed therebetween. The exterior housing can 20 has a bottomed cylindrical shape which is open at an upper end, and an opening of the exterior housing can 20 is capped with a sealing assembly 30.

The positive electrode 11 comprises a positive electrode current collector, and a positive electrode mixture layer formed on at least one face of the positive electrode current collector. Examples of the positive electrode current collector include a foil of a metal that is stable in a potential range of the positive electrode 11, such as aluminum or an aluminum alloy, and a film in which such a metal is provided on the surface layer. The positive electrode mixture layer contains a positive electrode active material, a conductive agent such as acetylene black, and a binder such as polyvinylidene fluoride, and is preferably formed on each side of the positive electrode current collector. For the positive electrode active material, there is used, for example, a lithium-containing transition metal composite oxide. The positive electrode 11 can be manufactured by applying a positive electrode mixture slurry containing a positive electrode active material, a conductive agent, a binder, and the like on the positive electrode current collector, drying the resulting coating film, and then compressing it to form a positive electrode mixture layer on each side of the positive electrode current collector.

The negative electrode 12 comprises a negative electrode current collector, and a negative electrode mixture layer formed on at least one face of the negative electrode current collector. Examples of the negative electrode current collector include a foil of a metal that is stable in a potential range of the negative electrode 12, such as copper or a copper alloy, and a film in which such a metal is provided on the surface layer. The negative electrode mixture layer contains a negative electrode active material and a binder such as styrene-butadiene rubber (SBR), and is preferably formed on each side of the negative electrode current collector. For the negative electrode active material, there is used, for example, graphite, or a silicon-containing compound. The negative electrode 12 can be manufactured by applying a negative electrode mixture slurry containing a negative electrode active material, a binder, and the like on the negative electrode current collector, drying the resulting coating film, and then rolling it to form a negative electrode mixture layer on each side of the negative electrode current collector.

For the electrolyte, a non-aqueous electrolyte is used, for example. The non-aqueous electrolyte contains a non-aqueous solvent, and an electrolyte salt dissolved in the non-aqueous solvent. For the non-aqueous solvent, there may be used, for example, esters, ethers, nitriles, amides, or mixed solvents of two or more of these, and the like. The non-aqueous solvent may also contain a halogen substitute in which at least a part of hydrogen of these solvents is substituted with a halogen atom such as fluorine. Note that the non-aqueous electrolyte is not limited to a liquid electrolyte, but may be a solid electrolyte. For the electrolyte salt, there is used, for example, a lithium salt such as LiPF₆. The kind of the electrolyte is not limited to a particular kind, but may also be an aqueous electrolyte.

The cylindrical battery 10 comprises insulating plates 18 and 19 arranged on the upper and lower sides of the electrode assembly 14, respectively. In the example illustrated in FIG. 1, a positive electrode lead 15 attached to the positive electrode 11 extends to the sealing assembly 30 side through a through hole of the insulating plate 18, and a negative electrode lead 16 attached to the negative electrode 12 extends to the bottom side of the exterior housing can 20 along the outside of the insulating plate 19. The positive electrode lead 15 is connected to a lower face of an internal terminal plate 31, which is a bottom plate of the sealing assembly 30, by welding or the like, and a cap 35, which is a top plate of the sealing assembly 30 electrically connected to the internal terminal plate 31, becomes a positive electrode external terminal. The negative electrode lead 16 is connected to a bottom inner face of the exterior housing can 20 by welding or the like, and the bottom of the exterior housing can 20 becomes a negative electrode external terminal.

The exterior housing can 20 is a bottomed cylindrical metallic container. A gasket 39 is provided between the exterior housing can 20 and the sealing assembly 30 to achieve sealability inside the battery. Although details will be described below, an opening end 20B of the exterior housing can 20 is formed to have an outer diameter smaller than an outer diameter of a body part 20A of the exterior housing can 20 that houses the electrode assembly 14. There is formed, in the vicinity of the opening end 20B of the exterior housing can 20, a grooved part 20C which supports the sealing assembly 30, the grooved part 20C being formed by causing a part of a lateral face part of the exterior housing can 20 to project to the inside. The grooved part 20C is preferably formed circularly along the circumferential direction of the exterior housing can 20, and supports the sealing assembly 30 on its upper face. The sealing assembly 30 supported on the grooved part 20C is fixed to the exterior housing can 20 by the opening end of the exterior housing can 20 which is caulked to the sealing assembly 30.

The sealing assembly 30 has a stacked structure of the internal terminal plate 31, a lower vent member 32, an insulating member 33, an upper vent member 34, and a cap 35 in this order from the electrode assembly 14 side. Each member constituting the sealing assembly 30 has, for example, a disk shape or a ring shape, and each member except for the insulating member 33 is electrically connected each other. The lower vent member 32 and the upper vent member 34 are connected each other at each of central parts thereof, and the insulating member 33 is interposed between each of the circumferential parts of the vent members 32 and 34. If the internal pressure of the battery increases with abnormal heat generation, the lower vent member 32 is deformed so as to push the upper vent member 34 upward to the cap 35 side to break, resulting in cutting off of a current path between the lower vent member 32 and the upper vent member 34. If the internal pressure further increases, the upper vent member 34 breaks, and gas is discharged through a vent hole 35A of the cap 35.

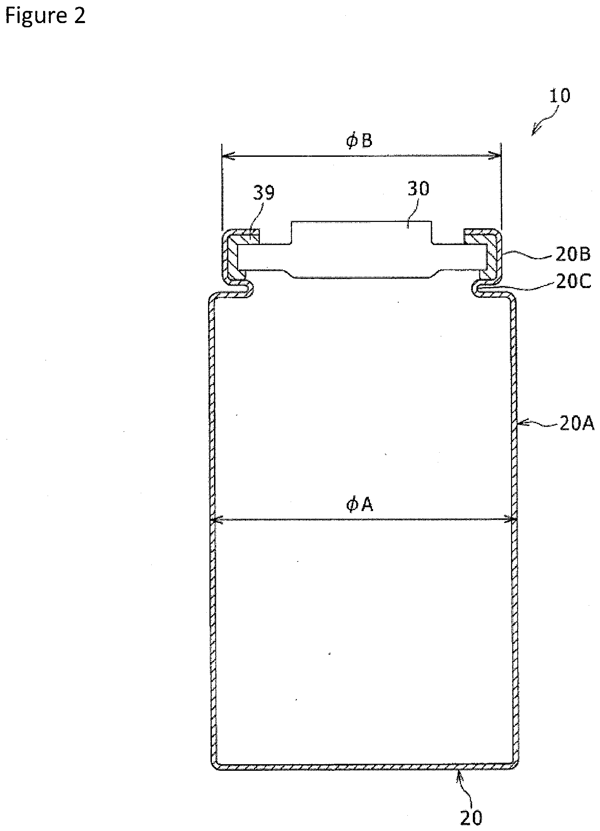

The exterior housing can 20 and the sealing assembly 30 will be described in detail with reference to FIG. 2. FIG. 2 is a sectional view of the cylindrical battery 10. Note that in FIG. 2, the electrode assembly 14 and the like inside the cylindrical battery 10 are not illustrated.

The exterior housing can 20 is a bottomed cylindrical metallic container that houses the electrode assembly 14 (see FIG. 1) and the electrolyte and is open at the upper end, as described above. In the exterior housing can 20, the opening end 20B is formed to have an outer diameter (φB in the figure) smaller than an outer diameter (φA in the figure) of the body part 20A, as described above.

The body part 20A is a portion in the exterior housing can 20 that is sandwiched between the bottom and the lower face of the grooved part 20C and houses the electrode assembly 14. The body part 20A is formed into a cylindrical shape. The outer diameter of the body part 20A of the present embodiment is preferably 20 mm or more and 35 mm or less. The outer diameter of the body part 20A of the present embodiment is more preferably 20 mm or more and 21 mm or less.

The opening end 20B is a portion in the exterior housing can 20 that is sandwiched between the opening end and the upper face of the grooved part 20C and houses the sealing assembly 30. The opening end 20B is formed into a cylindrical shape.

The opening end 20B of the present embodiment has preferably an outer diameter smaller than an outer diameter of the body part 20A by 2% or more. The opening end 20B of the present embodiment has more preferably an outer diameter smaller than an outer diameter of the body part 20A by 10% or less. In other words, the outer diameter of the opening end 20B is preferably 90% to 98% of the outer diameter of the body part 20A.

Furthermore, the opening end 20B of the present embodiment has preferably an outer diameter smaller than an outer diameter of the body part 20A by 5% or more. The opening end 20B of the present embodiment has more preferably an outer diameter smaller than an outer diameter of the body part 20A by 9% or less. In other words, the outer diameter of the opening end 20B is preferably 91% to 95% of the outer diameter of the body part 20A.

The sealing assembly 30 is fixed to the opening end 20B of the exterior housing can 20 by caulking. A gasket 39 is provided between the exterior housing can 20 and the sealing assembly 30 to achieve sealability inside the exterior housing can 20. For the sealing assembly 30 of the present embodiment, there is used a sealing assembly having a diameter corresponding to the outer diameter of the opening end 20B of the exterior housing can 20.

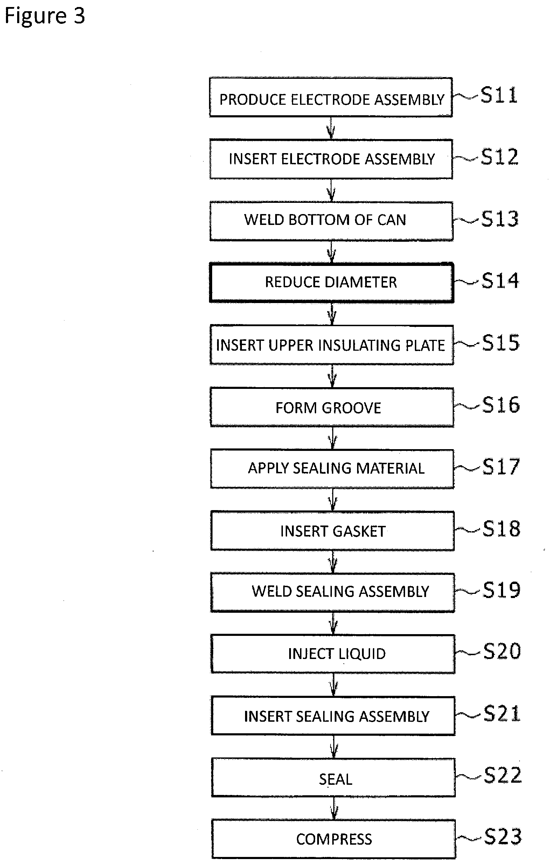

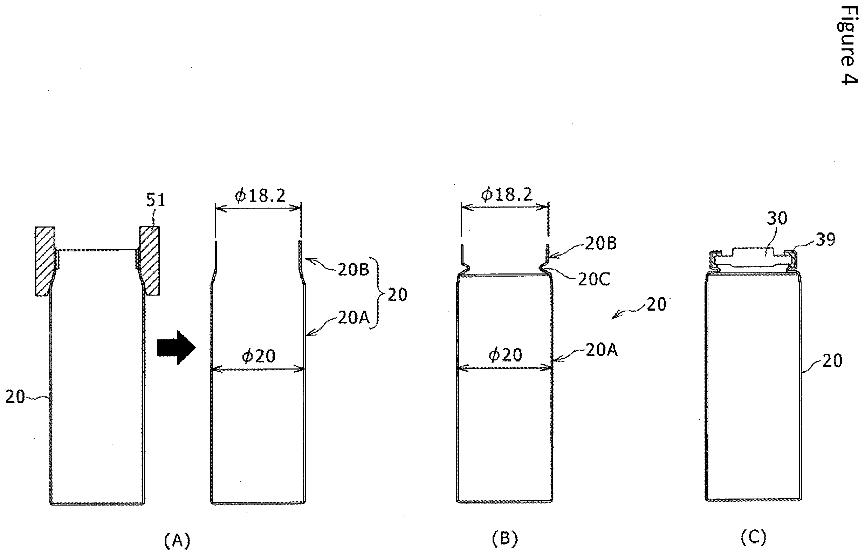

A method of manufacturing the cylindrical battery 10 will be described with reference to FIGs. 3 and 4. Hereinafter, reference may be appropriately made to FIG. 1. FIG. 3 is a flowchart illustrating a flow of a manufacturing process. FIG. 4 is a schematic diagram illustrating a part of the manufacturing process. In FIG. 4, the electrode assembly 14 and the like inside the cylindrical battery 10 are not illustrated.

As illustrated in FIG. 3, in step S11, the positive electrode 11 and the negative electrode 12 are spirally wound with the separator 13 interposed therebetween to produce the electrode assembly 14. In step S12, the electrode assembly 14 is inserted with the insulating plate 19 into the bottomed cylindrical exterior housing can 20 produced by drawing a steel plate. In step S13, an inner face of the bottom of the exterior housing can 20 and the negative electrode lead 16 are welded to each other.

As illustrated in FIG. 4(A), in step S14, the opening end 20B (10 mm from the opened upped end) of the exterior housing can 20 is subjected to diameter reduction processing so that the diameter is changed from φ20 mm to φ18.2 mm, using a die 51 for diameter reduction having an inner diameter of φ21 mm to φ18.2 mm and a tapered shape of 10°. When the die 51 for diameter reduction having a tapered shape is used, the die 51 for diameter reduction can be easily separated from the exterior housing can 20 after the processing. The diameter reduction processing may be performed so that a diameter reduction portion having a tapered shape in which the outer diameter of the exterior housing can 20 is reduced toward the grooved part 20C is formed between the body part 20A and the grooved part 20C. When step S14 is performed after step S12, the electrode assembly 14 having an outer diameter larger than an inner diameter of the opening end 20B can be inserted into the exterior housing can 20.

In step S15, the insulating plate 18 is inserted into the exterior housing can 20. As illustrated in FIG. 4(B), in step S16, the opening end 20B subjected to the diameter reduction processing is subjected to groove formation, whereby the grooved part 20C is formed. In step S17, a sealing material is applied to the inner face of the grooved part 20C.

In step S18, the gasket 39 is inserted into the grooved part 20C. In step S19, the internal terminal plate 31 of the sealing assembly 30 and the positive electrode lead 15 are welded to each other. The outer diameters of the sealing assembly 30 and the gasket 39 are determined according to the outer diameter of the opening end 20B subjected to the diameter reduction processing. In step S20, the electrolyte is injected into the exterior housing can 20. In step S21, the sealing assembly 30 is inserted into the opening end 20B of the exterior housing can 20.

As illustrated in FIG. 4(C), in step S22, the sealing assembly 30 is fixed by caulking using a caulking die (not illustrated). The caulking die has an upper die that is moved up and down by a pressing device and a lower die that receives the upper die in the grooved part 20C, for example. Two split dies are used for the lower die, and a part of the split dies is inserted to the grooved part 20C when the opening end 20B is pressed, and receives a pressure from the upper die. In step S23, the height of the cylindrical battery 10 is adjusted by pressing the cylindrical battery 10.

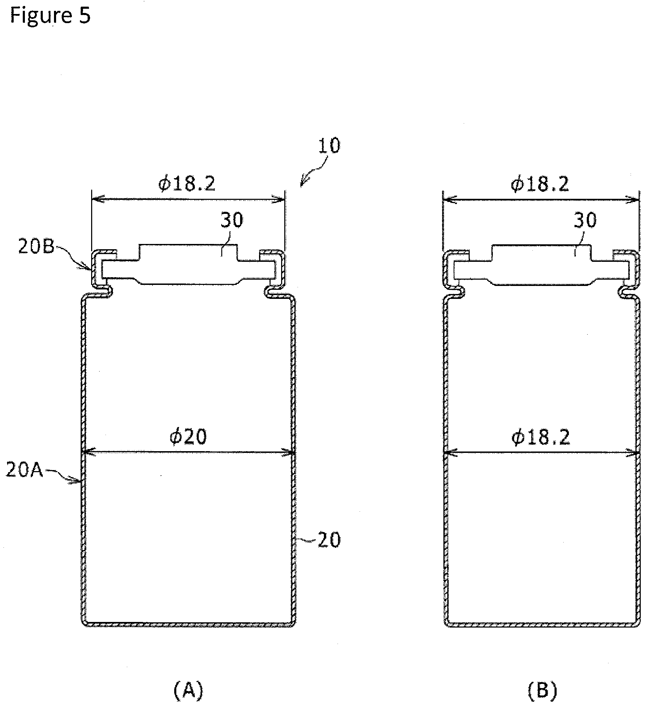

Effects of the cylindrical battery 10 will be described with reference to FIGs. 5(A) and 5(B). FIG. 5(A) is a sectional view of the cylindrical battery 10, which is an example of an embodiment. FIG. 5(B) is a sectional view of a cylindrical battery of a comparative example. Note that in FIGs. 5(A) and 5(B), the electrode assembly 14 and the like inside the cylindrical battery 10 are not illustrated.

According to the cylindrical battery 10 of the present embodiment, the outer diameter of the body part 20A that houses the electrode assembly 14 is larger than an outer diameter of the cylindrical battery of the comparative example. This enables the exterior housing can 20 of the cylindrical battery 10 to house the electrode assembly 14 having a large outer diameter into which more active materials are filled, which makes it possible to increase the capacity of the cylindrical battery 10.

In the conventional cylindrical battery, the body part and the opening end have the same outer diameter, in the same manner as in the comparative example. Therefore, to increase the size of the battery in order to increase the capacity, the outer diameter of the opening end is increased in addition to the outer diameter of the body part. However, when the outer diameter of the sealing assembly is also increased according to the opening end, the caulking force when the sealing assembly is caulked to the exterior housing can and the durability strength of the sealing assembly against an external impact become insufficient, and therefore, it is necessary to increase the thickness of the sealing assembly.

When increasing the thickness of the sealing assembly, it is necessary to increase the thickness of the internal terminal plate, the lower vent member, the upper vent member, or the cap constituting the sealing assembly, for example, which causes an increase in manufacturing cost, an increase in weight of the sealing assembly which leads to an increase in weight of the cylindrical battery, and a battery capacity reduction equivalent to the increased thickness of the sealing assembly.

Therefore, when the cylindrical battery 10 of the present embodiment is applied, there can be used the sealing assembly 30 having a diameter corresponding to the outer diameter of the opening end 20B which is smaller than the outer diameter of the body part 20A, which makes it possible to suppress the increase in weight of the cylindrical battery caused by the increase in the thickness of the sealing assembly and suppress the capacity reduction. In this way, the cylindrical battery can be provided which can suppress the increase in weight while increasing the capacity.

In the cylindrical battery of the present embodiment, the following effects are exhibited. For example, even when the outer diameter of the exterior housing can of the cylindrical battery is changed from φ18.2 mm to φ20 mm, the common sealing assembly and gasket can be used. The insulating plate 18 arranged on the upper side of the electrode assembly 14 may be also used in common. In step S22 illustrated in FIG. 3, the common caulking die can be also used. Therefore, the switching of the manufacturing device according to the change in the outer diameter of the exterior housing can in the manufacturing process can be simplified, whereby the manufacturing cost can be reduced.

### REFERENCE SIGNS LIST

10 Cylindrical battery, 11 Positive electrode, 12 Negative electrode, 13 Separator, 14 Electrode assembly, 15 Positive electrode lead, 16 Negative electrode lead, 18 Insulating plate, 19 Insulating plate, 20 Exterior housing can, 20A Body part, 20B Opening end, 20C Grooved part, 30 Sealing assembly, 31 Internal terminal plate, 32 Lower vent member, 33 Insulating member, 34 Upper vent member, 35 Cap, 35A Vent hole, 39 Gasket, 51 Die for diameter reduction

## Claims

1. A method for manufacturing a cylindrical battery (10), the cylindrical battery (10) comprising:
an electrode assembly (14) in which a positive electrode (11) and a negative electrode (12) are wound with a separator (13) interposed therebetween;
an insulating plate (18) arranged on an upper side of the electrode assembly (14);
an electrolyte;
a bottomed cylindrical exterior housing can (20) that houses the electrode assembly (14) and the electrolyte; and
a sealing assembly (30) that is fixed to an opening end (20B) of the exterior housing can (20) by caulking, wherein
an outer diameter of a body part (20A) of the exterior housing can (20) that houses the electrode assembly is 20 mm or more and 21 mm or less, and
the opening end (20B) that houses the sealing assembly (30) has an outer diameter that is 91% to 95 % of the outer diameter of the body part (20A),
the method comprising
an electrode assembly insertion step of inserting the electrode assembly (14) into
the exterior housing can (20);
a diameter reduction step of reducing the outer diameter of the opening end (20B) after the electrode assembly insertion step; and
an insulating plate insertion step of inserting the insulating plate (18) into the exterior housing can (20) after the diameter reduction step.

## Patentansprüche

1. Verfahren zur Herstellung einer zylinderförmigen Batterie (10), wobei die zylinderförmige Batterie (10) umfasst:
eine Elektrodenanordnung (14), in der eine Positivelektrode (11) und eine Negativelektrode (12) mit einem dazwischen angeordneten Separator (13) gewickelt sind;
eine Isolierplatte (18), die an einer oberen Seite der Elektrodenanordnung (14) angeordnet ist;
einen Elektrolyten;
einen zylinderförmigen äußeren Gehäusebecher (20) mit Boden, der die Elektrodenanordnung (14) und den Elektrolyten unterbringt; und
eine Dichtungsanordnung (30), die an einem Öffnungsende (20B) des äußeren Gehäusebechers (20) mittels Verstemmens befestigt ist, wobei
ein äußerer Durchmesser eines Körperteils (20A) des äußeren Gehäusebechers (20), der die Elektrodenanordnung unterbringt, 20 mm oder mehr und 21 mm oder weniger beträgt, und
das Öffnungsende (20B), das die Dichtungsanordnung (30) unterbringt, einen äußeren Durchmesser aufweist, der 91 % bis 95% des äußeren Durchmessers des Körperteils (20A) beträgt,
wobei das Verfahren umfasst
einen Elektrodenanordnung-Einführungsschritt zum Einführen der Elektrodenanordnung (14) in den äußeren Gehäusebecher (20);
einen Durchmesserverminderungsschritt zum Vermindern des äußeren Durchmessers des Öffnungsendes (20B) nach dem Elektrodenanordnung-Einführungsschritt; und
einen Isolierplatten-Einführungsschritt zum Einführen der Isolierplatte (18) in den äußeren Gehäusebecher (20) nach dem Durchmesserverminderungsschritt.

## Revendications

1. Procédé pour fabriquer une batterie cylindrique (10), la batterie cylindrique (10) comprenant :
un ensemble d'électrodes (14) dans lequel une électrode positive (11) et une électrode négative (12) sont enroulées avec un séparateur (13) intercalé entre elles ;
une plaque isolante (18) agencée sur un côté supérieur de l'ensemble d'électrodes (14) ;
un électrolyte ;
un boîtier extérieur cylindrique à fond (20) qui loge l'ensemble d'électrodes (14) et l'électrolyte ; et
un ensemble d'étanchéité (30) qui est fixé à une extrémité d'ouverture (20B) du boîtier extérieur (20) par calfeutrage, dans lequel :
un diamètre externe d'une partie de corps (20A) du boîtier extérieur (20) qui loge l'ensemble d'électrodes est de 20 mm ou plus et de 21 mm ou moins, et
l'extrémité d'ouverture (20B) qui loge l'ensemble d'étanchéité (30) a un diamètre externe qui représente de 91% à 95% du diamètre externe de la partie de corps (20A),
le procédé comprenant :
une étape d'insertion d'ensemble d'électrodes consistant à insérer l'ensemble d'électrodes (14) dans le boîtier extérieur (20) ;
une étape de réduction de diamètre consistant à réduire le diamètre externe de l'extrémité d'ouverture (20B) après l'étape d'insertion d'ensemble d'électrodes ; et
une étape d'insertion de plaque isolante consistant à insérer la plaque isolante (18) dans le boîtier extérieur (20) après l'étape de réduction de diamètre.
